Europäisches Patentamt

European Patent Office

Office européen des brevets

(19)

(11) Veröffentlichungsnummer: **0 051 779**
**B1**

(12) # EUROPÄISCHE PATENTSCHRIFT

(45) Veröffentlichungstag der Patentschrift:
23.01.85

(21) Anmeldenummer: 81108851.7

(22) Anmeldetag: 24.10.81

(51) Int. Cl.⁴: **G 01 F 19/00,** G 01 G 17/04

(54) **Vorrichtung zum Messen der tatsächlichen Ausbringmenge von Pflanzenschutzmitteln.**

(30) Priorität: 06.11.80 DE 3041916

(43) Veröffentlichungstag der Anmeldung:
19.05.82 Patentblatt 82/20

(45) Bekanntmachung des Hinweises auf die Patenterteilung:
23.01.85 Patentblatt 85/4

(84) Benannte Vertragsstaaten:
AT BE CH FR GB IT LI LU NL SE

(56) Entgegenhaltungen:
FR - A - 1 111 752
US - A - 4 079 629

(73) Patentinhaber: **Graef, Steffen, Roter Brachweg 26,
D-8400 Regensburg (DE)**

(72) Erfinder: **Graef, Steffen, Roter Brachweg 26,
D-8400 Regensburg (DE)**

(74) Vertreter: **Wasmeier, Alfons et al, Patent Attorneys A.
Wasmeier H. Graf Postfach 382 Greflingerstrasse 7,
D-8400 Regensburg 1 (DE)**

**Beschreibung**

Zum Ausbringen von Pflanzenschutzmitteln werden in der Landwirtschaft Pflanzenschutzspritzen verwendet. Für die zumeist breitflächige Ausbringung von Bodenfahrzeugen aus verwendet man sogenannte Flächenspritzgestänge, die quer zur Fahrtrichtung angeordnete Rohrleitungen unterschiedlicher Breite (ca. 6 bis 24 m) aufweisen, an denen eine Vielzahl von Düsen zur Ausbringung des Pflanzenschutzmittels angebracht sind. Diese Düsen haben in der Regel einen Abstand von 50 cm voneinander. Da die Pflanzenschutzmittel, die üblicherweise in wäßriger Lösung verdünnt sind, sehr präzise ausgebracht werden müssen, verfügen Pflanzenschutzspritzen im allgemeinen über mehr oder weniger genau arbeitende Dosiereinrichtungen, die rein manuell, halbautomatisch oder vollautomatisch arbeiten. Die Dosierungsangaben der Pflanzenschutzmittelhersteller beziehen sich in der Regel auf Liter pro Hektar (l/ha). Die Einflußfaktoren auf die Ausbringmenge sind die Fahrgeschwindigkeit, die Arbeitsbreite und die Ausstoßmenge. Aus Kostengründen verfügen die meisten in der Praxis verwendeten Pflanzenschutzspritzen nicht über eine Dosiereinrichtung, die die Fahrgeschwindigkeit getrennt mißt. Die Fahrgeschwindigkeit wird in der Regel vom Geschwindigkeitsmesser (Tachometer) des Schleppers abgelesen, in anderen Fällen experimentell bestimmt. Bei jeweils untereinander gleichen Düsenabständen von z. B. 50 cm ist es ferner nicht notwendig, die Gesamtarbeitsbreite des Flächenspritzgestänges mit zu berücksichtigen, da jede Düse bei gleicher Fahrgeschwindigkeit gleiche Flächen bespritzt. Es genügt daher, von der Ausstoßmenge einer einzigen Düse auszugehen, vorausgesetzt, daß alle anderen Düsen von gleichem Typ sind und den gleichen Verschleißzustand aufweisen sowie unter gleichen Druckverhältnissen arbeiten. Die meisten im Einsatz befindlichen Pflanzenschutzspritzen verfügen ferner nicht über eine Meßvorrichtung, die zur Dosierung die tatsächliche Ausstoßmenge der Düsen mißt. In nahezu allen Fällen wird lediglich der Ausstoßparameter »Druck« gemessen. Über eine Ausstoßmengentabelle, die nach Düsentypen (Düsengrößen) geordnet ist, läßt sich anhand des Druckes der tatsächliche Ausstoß bzw. die tatsächliche Ausbringmenge in l/ha in Abhängigkeit von den Fahrgeschwindigkeiten ablesen. Halbautomatisch arbeitende Pflanzenschutzspritzen und eine Vielzahl der Standard-Pflanzenschutzspritzen verfügen über sogenannte Einstellhilfen. Hierbei ist die Ausbringmengentabelle direkt am oder um das Manometer herum angeordnet, so daß sich direkt aufgrund der Manometeranzeige in Abhängigkeit vom eingebauten Düsentyp und der gewählten Fahrgeschwindigkeit die tatsächliche Ausbringmenge in l/ha ablesen läßt.

Die Genauigkeit dieser vorbeschriebenen Verfahren ist jedoch stark abhängig von der tatsächlichen Übereinstimmung der eingebauten Düsentype (Düsengröße) mit der mitgelieferten Tabelle, vom jeweiligen Verschleißzustand der Düsen, von der Anzeigegenauigkeit des Manometers, von der Dichte und Viskosität des ausgebrachten Mediums und von etwaigen Druckverlusten zwischen der Meßstelle des Manometers und den jeweiligen Düsen. Zusätzliche Abweichungen können sich durch zumeist verwendete Düsenvorschaltelemente, z. B. Düsenfilter, Kugelventilfilter, Kugelventile, ergeben.

Aus diesen Gründen ist es erforderlich, daß jeder Landwirt die tatsächliche Ausstoßmenge bzw. Ausbringmenge seiner Pflanzenschutzspritze vor jeder Spritzung überprüft, und hierfür sind in der Praxis zwei Methoden üblich:

### Methode 1

Der Behälter der Pflanzenschutzspritze wird bis zu einer gewissen Füllhöhe oder vollständig mit Wasser aufgefüllt. Dann wird die Spritze in Betrieb genommen und damit eine bestimmte Fläche überfahren. Anschließend wird die Fehlmenge im Behälter gemessen, diese Menge durch den Flächeninhalt der überfahrenen Fläche geteilt und der erhaltene Wert auf die Benennung l/ha hochgerechnet. Diese Methode hat insbesondere folgende Fehlerquellen: Zumeist wird die Fehlmenge an der Behälterskala abgelesen, wodurch größere Fehler durch Ungenauigkeiten der Behälterskala, verschiedene Neigungen des Behälters, zu grobe Teilung dieser Skala und Ablesefehler auftreten.

### Methode 2

Ein Meßbecher wird eine gewisse Zeit bei eingestelltem Betriebsdruck unter eine Düse gehalten, die Ausstoßmenge und die Meßzeit werden ermittelt, der Wert wird auf die Benennung l/min bzw. l/Std. hochgerechnet, und sodann wird mittels Tabelle oder Rechenschieber für eine bestimmte Fahrgeschwindigkeit die tatsächliche Ausbringmenge in l/ha ermittelt. Der Nachteil dieser Methode besteht insbesondere darin, daß die praktische Durchführung dieser Methode für den Landwirt relativ kompliziert ist.

Beide Methoden erfordern in der Regel eine gründliche Kenntnis der physikalischen und rechnerischen Vorgänge sowie die Kenntnis der möglichen Fehlerquellen. Diese Kenntnisse sind im allgemeinen beim Landwirt nicht gegeben. Ferner sind die Überprüfungsmethoden relativ umständlich und zeitraubend. Dies hat dazu geführt, daß der Landwirt in der Regel die tatsächlichen Ausstoßwerte seiner Pflanzenschutzspritze, wenn überhaupt, dann nur einem im Jahr vor der Spritzsaison überprüft und daraufhin das ganze Jahr über an der Einstellung seines Spritzgerätes keine Veränderungen mehr vornimmt und sämtliche unterschiedlichen Präparate mit gleichen Wasseraufwandmengen verspritzt.

Dies hat selbstverständlich zur Folge, daß einerseits die Wirkung des Spritzmittels beeinträchtigt werden kann und daß andererseits der Landwirt beim Anmischen der unterschiedlichen Mittelkonzentrationen Fehler macht bzw. daß Fehler dadurch entstehen, daß er sich auf die gleichbleibende Ausbringmenge seines Spritzgerätes verläßt. Auf die umweltschutztechnische Problematik von Über- und Unterkonzentrationen von Pflanzenschutzmitteln braucht im Detail nicht hingewiesen werden.

Aufgabe der Erfindung ist es, eine Prüf- und/ oder Meßvorrichtung zu schaffen, mit deren Hilfe der Landwirt in der Lage ist, ohne tiefere Kenntnis der tatsächlichen technischen und rechnerischen Zusammenhänge in möglichst kurzer Zeit und mit möglichst geringem Aufwand die tatsächliche Ausbringmenge seiner Pflanzenschutzspritze zu überprüfen bzw. zu messen, und erforderlichenfalls über die Druckeinstellung auf den richtigen Wert zu verändern.

Gemäß der Erfindung wird dies durch die in Anspruch 1 bzw. die in Anspruch 2 definierte Vorrichtung erreicht.

Weitere Ausführungsformen der Erfindung sind Gegenstand der abhängigen Ansprüche.

Das Meßgefäß, vorzugsweise ein Meßzylinder, weist eine Millimeterskala ausreichender Genauigkeit auf. Zusätzlich zu der Millimeterskala sind auf dem Meßzylinder Skalen für die unterschiedlichen Fahrgeschwindigkeiten aufgetragen, deren einzelne Abschnitte Ausbringmengenwerte in l/ha markieren. Diese Skalen sind für eine bestimmte Meßzeit berechnet. Der Landwirt braucht bei eingeschalteter Spritze somit lediglich den Meßzylinder für die Dauer der vorgeschriebenen Meßzeit (z. B. 30 Sekunden) unter eine der Düsen zu halten und kann dann sofort die bei der jeweiligen Fahrgeschwindigkeit erzielte Ausbringmenge in l/ha direkt am Meßzylinder ablesen. Stimmt die tatsächliche Ausbringmenge nicht mit dem Sollwert überein, kann der Vorgang bei veränderter Druckeinstellung problemlos so oft wiederholt werden, bis der Sollwert erreicht ist. Dadurch ist es nicht mehr notwendig, über komplizierte und oft nicht vorhandene oder auffindbare Ausbringmengentabellen düsenspezifisch mittels Druckeinstellangaben die Ausbringmengen zu suchen. Der Meßvorgang nach der Erfindung ist damit unabhängig von Düsentypen und Druckeinstellungen anwendbar.

Anstelle eines geeichten Meßzylinders kann ein handelsübliches nachgeeichtes Meßgefäß verwendet werden; die Genauigkeit der Ablesemöglichkeit unterschiedlicher Volumina in dem Meßgefäß bestimmt die Genauigkeit der Prüfung bzw. Messung, so daß in der Regel nichtgeeichte Meßgefäße zu ungenaue Ergebnisse bringen. Anstelle der Skala aus Meßdaten können Diagramme am Meßgefäß aufgebracht sein, so daß der Landwirt auf einfache Weise Zwischenwerte entnehmen kann.

Des weiteren kann der Meßzylinder mit einem elastischen Kragen versehen sein, damit auch Feinsttropfen des Spritzmittels in den Zylinder aufgefangen werden und mit Sicherheit verhindert wird, daß auch nur geringe Mengen an Spritzmittel beim Auffangen verloren gehen.

Nachstehend wird die Erfindung in Verbindung mit der Zeichnung anhand eines Ausführungsbeispieles erläutert. Es zeigt

Fig. 1 einen Meßzylinder der erfindungsgemäßen Art und

Fig. 2 in schematischer Darstellung eine Federwaage mit Meßbeutel.

Ein Meßzylinder 1, vorzugsweise aus klar durchsichtigem Kunststoff mit zylindrischer Wandung 2 und einem Stanzfuß 3 weist auf seiner Mantelfläche Markierungen 5 auf. Bei der dargestellten Ausführungsform ist der Meßzylinder nach oben durch einen elastischen Kragen 4, eine elastische Kappe oder dergl. Verengung abgeschlossen. Die Eintragungen auf der Mantelfläche 2 beziehen sich auf die Meßzeit, nämlich im Beispiel 15 Sekunden, sowie auf die Angaben l/ha für verschiedene Fahrgeschwindigkeiten von 3, 4, 5 und 6 km/Std. Bei einer bestimmten Füllhöhe des Zylindergefäßes 1, die bei einer Füllzeit von 15 sec erreicht wird, wird somit unter Berücksichtigung einer bestimmten eingestellten Fahrgeschwindigkeit die jeweilige Ausbringmenge in l/ha direkt abgelesen.

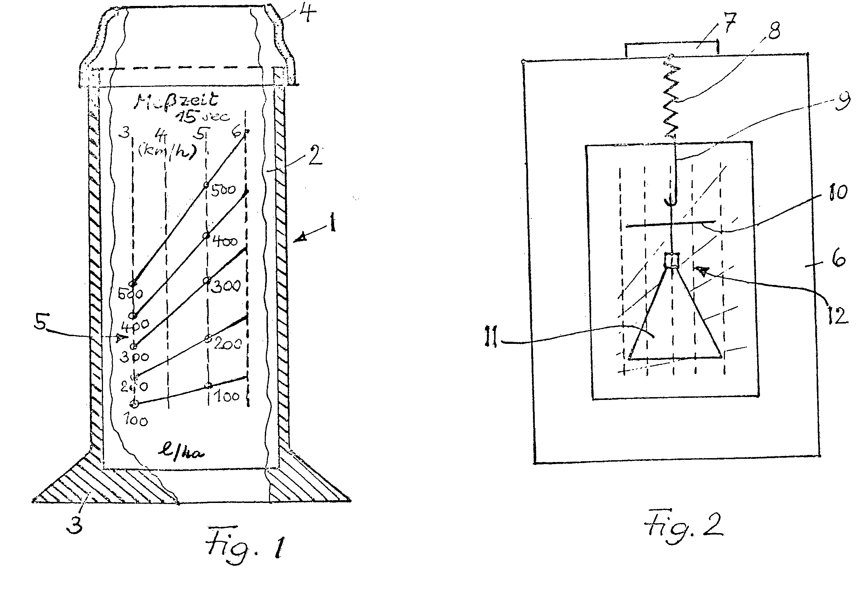

Bei der Ausführungsform nach Fig. 2 ist eine an einer Halterung 7 befestigte Federwaage 8 z. B. auf einer Trägerplatte 6 angebracht. Die Federwaage 8 besitzt einen Aufnahmehaken 9 mit Anzeigeelement 10; an dem Federhaken hängt ein Meßgefäß 11, z. B. ein Meßbeutel, mit der zu Meß- und Prüfzwecken entnommenen Flüssigkeitsmenge. Auf der Tafel 6 ist eine Skala 12 ähnlich der Skala 5 nach Fig. 1 aufgetragen, die aber auch in Form eines Diagramms aufgetragen sein kann. Entsprechend dem Gewicht der an der Federwaage hängenden Flüssigkeitsmenge zeigt das Anzeigeelement 10 auf der Skala 12 den Endwert l/ha an, der von dem Spritzgerät ausgebracht wird.

## Patentansprüche

1. Vorrichtung zum Messen der tatsächlichen Ausbringmenge eines flüssigen Pflanzenschutzmittels aus einer Pflanzenschutzspritze, mit einem eine Volumenskala tragenden Meßgefäß (1) zur Aufnahme der während einer vorgegebenen Meßzeit von der Pflanzenschutzspritze abgegebenen Menge an Pflanzenschutzmittel, dadurch gekennzeichnet, daß das Meßgefäß (1) zusätzlich Markierungen (5), die jeweils für unterschiedliche Fahrgeschwindigkeiten die zu der abgegebenen Menge zugehörigen Ausbringmengenwerte in Liter pro Hektar festlegen, besitzt.

2. Vorrichtung zum Messen der tatsächlichen Ausbringmenge eines flüssigen Pflanzenschutzmittels aus einer Pflanzenschutzspritze, mit einem Meßgefäß (11) zur Aufnahme der während einer vorgegebenen Meßzeit von der Pflanzen-

schutzspritze abgegebenen Menge an Pflanzen-schutzmittel, dadurch gekennzeichnet, daß eine Federwaage (8—11) mit Markierungen (12), die jeweils für unterschiedliche Fahrgeschwindigkeiten die zu der abgegebenen Menge zugehörigen Ausbringungswerte in Liter pro Hektar festlegen, vorgesehen ist und daß das Meßgefäß (11) an der Federwaage aufgehängt ist.

3. Vorrichtung nach Anspruch 1, dadurch gekennzeichnet, daß das Meßgefäß (1) ein — vorzugsweise geeichter — Meßzylinder ist.

4. Vorrichtung nach Anspruch 2, dadurch gekennzeichnet, daß das Meßgefäß (11) ein Meßbeutel ist.

5. Vorrichtung nach einem der Ansprüche 1 bis 4, dadurch gekennzeichnet, daß die Markierungen (5, 12) in Form von Skalen auf dem Meßgefäß vorgesehen sind.

6. Vorrichtung nach einem der Ansprüche 1 bis 4, dadurch gekennzeichnet, daß die Markierungen (5, 12) in Form von Diagrammen vorgesehen sind.

7. Vorrichtung nach einem der Ansprüche 1 bis 6, dadurch gekennzeichnet, daß die Markierungen (5) in die zylindrische Gefäßwandung (2) eingearbeitet sind.

8. Vorrichtung nach einem der Ansprüche 1 bis 6, dadurch gekennzeichnet, daß die Markierungen auf einer Folie auf die zylindrische Gefäßwandung (2) aufgeklebt sind.

9. Vorrichtung nach einem der Ansprüche 1 bis 4, dadurch gekennzeichnet, daß das Meßgefäß (1) einen elastischen Kragen (4) aufweist.

## Claims

1. Device for measuring the actual application amount of a liquid plant protection agent from a plant protection syringe, with a measuring vessel (1) carrying a volume scale for receiving the amount of plant protection agent dispensed during a predetermined time by the plant protection syringe, characterised in that the measuring vessel (1) additionally has markings (5) which in each case relate, for different travelling speeds, the application amount in meters per hectare to the applied amount.

2. Device for measuring the actual application amount of a liquid plant protection agent from a plant protection syringe with a measuring vessel (11) for receiving the amount of plant protection agent delivered by the plant protection syringe during a predetermined time, characterised in that a spring balance (8—11) with markings (12) is provided, which markings relate in each case, for different travelling speeds, the application values in litres per hectare to the applied amount, and that the measuring vessel (11) is suspended on the spring balance.

3. Device according to claim 1, characterised in that the measuring vessel (1) is a preferably calibrated measuring cylinder.

4. Device according to claim 1, characterised in that the measuring vessel (11) is a measuring bag.

5. Device according to one of claims 1 to 4, characterised in that the markings (5, 12) are provided in the form of scales on the measuring vessel.

6. Device according to one of claims 1 to 4, characterised in that the markings (5, 12) are provided in the form of diagrams.

7. Device according to one of claims 1 to 6, characterised in that the markings (5) are incorporated in the cylindrical vessel wall (2).

8. Device according to one of claims 1 to 6, characterised in that the markings are stuck onto a foil on the cylindrical vessel wall (2).

9. Device according to one of claims 1 to 4, characterised in that the measuring vessel (1) has an elastic collar (4).

## Revendications

1. Dispositif pour mesurer le débit effectif d'un produit liquide de protection phytosanitaire refoulé par une pompe; ce dispositif comportant un récipient de mesure (1), pourvu d'une échelle volumétrique, et servant à recueillir la quantité de produit phytosanitaire débitée par la pompe, pendant un laps de temps prédéterminé pour effectuer la mesure; caractérisé en ce que le récipient de mesure (1) comporte également des marques (5) qui donnent chacune, pour diverses valeurs de la vitesse de progression d'un véhicule porteur, les valeurs du débit en litres par hectare correspondant à la quantité débitée.

2. Dispositif pour mesurer le débit effectif d'un produit liquide de protection phytosanitaire refoulé par une pompe; ce dispositif comportant un récipient de mesure (11), pour recueillir la quantité de produit phytosanitaire débitée par la pompe pendant un laps de temps prédéterminé pour effectuer la mesure; caractérisé en ce qu'il comporte un peson à ressort (8—11), associé à des marques (12) qui donnent chacune, pour diverses valeurs de la vitesse de progression d'un véhicule porteur, les valeurs du débit en litres par hectare correspondant à la quantité débitée; et en ce que le récipient de mesure (11) est suspendu au peson à ressort.

3. Dispositif selon la revendication 1, caractérisé en ce que le récipient de mesure (1) est constitué de préférence par un cylindre de mesure étalonné.

4. Dispositif selon la revendication 2, caractérisé en ce que le récipient de mesure (11) est un sac de mesure.

5. Dispositif selon l'une des revendications 1 à 4, caractérisé en ce que les marques (5, 12) sont réalisées sous forme d'échelles graduées disposées sur le récipient de mesure.

6. Dispositif selon l'une des revendications 1 à 4, caractérisé en ce que les marques (5, 12) sont réalisées sous forme de graphiques.

7. Dispositif selon l'une des revendications 1 à 6, caractérisé en ce que les marques (5) sont gravées dans la paroi cylindrique (2) du récipient de mesure.

8. Dispositif selon l'une des revendications 1 à 6, caractérisé en ce que les marques sont portées par une feuille mince, qui est collée sur la paroi cylindrique (2) du récipient de mesure.

9. Dispositif selon l'une des revendications 1 à 4, caractérisé en ce que le récipient de mesure (1) comporte un col élastique.

Meßzeit
15 sec

3    4    5    6
(km/h)

500

400

300

500
400
200
300
200    100
100
100

l/ha

Fig. 1

Fig. 2